# EUROPÄISCHE PATENTSCHRIFT

(11) **EP 0 561 843 B1**
(45) Veröffentlichungstag und Bekanntmachung des Hinweises auf die Patenterteilung: **15.05.1996**
(21) Anmeldenummer: 91920832.2
(22) Anmeldetag: 03.12.1991
(51) Int. Cl.: C08K 5/56, C08L 53/00

(54) **LYO-GEL, SEINE HERSTELLUNG UND VERWENDUNG ZUM DICHTEN**
LYO-GEL, ITS MANUFACTURE AND USE FOR SEALING
LYOGEL, SA PREPARATION ET SON UTILISATION POUR L'ETANCHEMENT

(30) Priorität: 14.12.1990 DE 4039899
(43) Veröffentlichungstag der Anmeldung: 29.09.1993
(73) Patentinhaber: Henkel Kommanditgesellschaft auf Aktien, D-40191 Düsseldorf (DE)
(72) Erfinder: ANDRES, Johannes, D-4010 Hilden (DE); WICHELHAUS, Jürgen, D-5600 Wuppertal (DE); HEUCHER, Reimar, D-5000 Köln 60 (DE)
(86) Internationale Anmeldenummer: EP9102294
(87) Internationale Veröffentlichungsnummer: WO9210537

(56) Entgegenhaltungen:
- EP-A- 0 224 389
- EP-A- 0 299 718
- EP-A- 0 371 641
- US-A- 4 012 567

## Beschreibung

Die Erfindung betrifft ein Lyo-Gel, seine Herstellung und Verwendung zum Dichten, insbesondere von Vorrichtungen im Zusammenhang mit elektrischem Strom. Das Lyo-Gel besteht aus mindestens 2 Komponenten, nämlich einem Netzwerk aus einem Copolymerisat mit mindestens einem Comonomeren mit funktionellen Gruppen aus Carbonsäure und Carbonsäureanhydrid einerseits und mehrwertigen Metallen andererseits als Geliermittel und einer organischen Flüssigkeit als Dispergiermittel.

Ein derartiges Lyo-Gel wird in der deutschen Offenlegungsschrift 26 49 544 beschrieben. Demnach entsteht aus einem Acrylsäurealkylester-Copolymerisat aus Acrylsäurealkylester, α,β-ungesättigten Carbonsäureanhydriden, insbesondere aus 0,2 bis etwa 20 Gew.-% Maleinsäureanhydrid, und ethylenisch ungesättigten Monomeren, das in einem organischen Lösungsmittel gelöst ist, und aus einem Metallalkoxid beim Lagern bei Raumtemperatur ein Gel (siehe Seite 10, Zeilen 4 bis 8). Bei den organischen Lösungsmitteln handelt es sich um leichtflüchtige Stoffe, so daß die Polymer-Lösung schnell trocknet (siehe Seite 12, Absatz 2). Da die Gelbildung unerwünscht ist, setzt man wenigstens 20 Gew.-% eines niederen aliphatischen Alkohols zu und chelatisiert die Metallalkoxide (siehe Seite 5, letzter Absatz bis Seite 6, Zeile 3 sowie Seite 10, ab Zeile 12 bis Seite 11, Absatz 3). Konkret werden Octylenglykol, Triethanolamin, 2,4-Pentandion oder Milchsäure genannt, wobei die Acetylacetonate bevorzugt sind.
Die so stabilisierte Copolymer-Lösung wird als Klebstoff verwendet. Nach dem Entfernen des Lösungsmittels einschließlich des Alkohols vernetzt das Copolymere nämlich und ergibt Verklebungen mit hoher Kohäsionsfestigkeit (siehe Seite 13, Absatz 2).

Ein ähnliches Copolymerisat beschreiben Milker und Czech in "Adhäsion" (1985), Seiten 29 bis 32: Ein Copolymerisat aus 2-Ethylhexyl-Acrylat, n-Butylacrylat und Hydroxyethylacrylat sowie Acrylsäure wird in Ethylacetat, Methylethylketon und Aceton gelöst und mit Orthotitansäureestern und Metallacetylacetonaten vernetzt (siehe Seite 29, mittlere Spalte). Bei Verwendung von Organoyltitanat bildet sich selbst in Gegenwart von Alkoholen ein Gel (siehe Seite 31, mittlere Spalte). Das ist jedoch unerwünscht. Die Polymerlösungen werden vielmehr als Haftklebstoff verwendet, da die Acrylat-Copolymeren nach Verdampfen des Alkohols und der anderen Lösungsmittel spontan vernetzen (siehe Seite 29, linke Spalte).

Weitere derartige druckempfindliche Klebstoffmischungen werden in den Offenlegungsschriften 24 16 991 sowie 23 37 558 beschrieben.

In all diesen Fällen ist das Ziel, druckempfindliche Klebstoffe herzustellen. Die Gelbildung ist unerwünscht. Die dennoch erhaltenen Gele haben z.B. den Nachteil, daß bei einem Feststoffgehalt zwischen 10 und 60 % der Rest des Lösungsmittels entfernt werden muß, was mit einem Volumenschrumpf verbunden ist (Seite 21 der DE 24 16 991). Auch im Falle der DE 23 37 558 gibt es einen Volumenschrumpf beim Trocknen. Die erhaltenen Gele sind bei Raumtemperatur nicht fließfähig und dichten nicht ausreichend ab. Es gibt keinerlei Hinweis, sie als Dichtstoff zu verwenden.

Dichtstoffe haben die Funktion, Spalten, Fugen und Hohlräume zwischen Körpern durch Stoffschluß volumenüberbrückend gas- und flüssigkeitsdicht auszufüllen. So werden Hohlräume in Kabeln und deren Verbindungselementen wie Steckern, Leisten, Muffen usw. häufig verfüllt, um gegen Umwelteinflüsse wie Wasser, Staub, Luft, Öl usw. abzudichten sowie einen mechanischen und elektrischen Schutz zu bieten.

Zu diesem Zweck werden bekanntlich Dichtungssysteme auf Basis von folgenden makromolekularen Stoffen eingesetzt:
A) Thermoplastische Polymere, insbesondere Schmelzkleber und Spritzgußmassen,
B) vernetzende Systeme (Duroplasten) wie Epoxide, Polyurethane usw.,
C) vernetzende Systeme (Elastomere) wie Silikone und andere Gummis und
D) Wachse, Bitumen, Fette und Öle.

Diese bekannten Systeme weisen folgende Nachteile auf:
1.) Die Dichtstoffe schrumpfen beim Aushärten bzw. zwischen der Applikations- und Einsatztemperatur. Dadurch entstehen Spannungen, die sogar zu Rissen und Undichtigkeiten führen können, insbesondere bei den Systemen A), B) und D).
2.) Die Dichtstoffe sind bezüglich des Temperaturbereiches nur begrenzt einsetzbar, da sie außerhalb eines mehr oder weniger engen Bereiches die mechanische Festigkeit verlieren, brechen, auslaufen oder sich zersetzen. Dies gilt insbesondere für die Systeme A), B) und D).
3.) Die Dichtstoffe haften an den unterschiedlichen Werkstoffen teilweise nur unzureichend. Dies gilt in der Regel für die Systeme A), B), C) und D).
4.) Die Dichtstoffe sind nur ungenügend verformbar, z.B. beim Einbringen weiterer Kontakte in die bereits verfüllte Masse. Das gilt für alle Dichtsysteme A), B), C) und D).
5.) Die Dichtstoffe sind ungenügend resistent gegenüber Umwelteinflüssen wie Lösungsmittel, Ölen, Wasser usw. . Das gilt für die Systeme A) und D) sowie teilweise auch für B).
6.) Beim Mischen, Verfüllen oder Härten entstehen gefährdende Komponenten und aggressive Spaltprodukte. Das gilt für die Systeme B) und C).

Dillman und Sanders beschreiben in "Adhesives Age" (1989) auf den Seiten 24 bis 29 Klebstoffe und Dichtstoffe auf der Basis eines thermoplastischen Gummis aus einem Blockterpolymeren mit Maleinsäureanhydrid-Gruppen (Kraton FG 1901X). Zur Herstellung eines Dichtstoffes werden 100 Gew.-Teile dieses Copolymeren mit 270 Gew.-Teilen Regalrez 1018 (aliphatisches Kohlenwasserstoff-Harz), 50 Gew.-Teile Endex 160 (aromatisches Kohlenwasserstoff-Harz), 1 Gew.-Teil Irganox 1010 (thermischer Stabilisator), 1 Gew.-Teil Tinuvin 770 (Lichtabsorber) und 1,5 Gew.-Teile Tinuvin P (UV-Absorber) bei 180 °C 45 Minuten lang gemischt. Diese Dichtstoffe haben Schmelzviskositäten von 0,7 bis 2,6 Pa·s bei 177 °C. Derartige Dichtstoffe haben den Nachteil, daß die Formbeständigkeit oberhalb von 60 °C nicht mehr gegeben ist. Außerdem gelten die unter den Punkten 1.), 2.), 4.) und 5.) aufgelisteten Nachteile.

Diese Nachteile möchte die Erfindung vermeiden und darüber hinaus ein einfach zu handhabendes System zur Verfügung stellen. Die erfindungsgemäße Aufgabe besteht also darin, einen Dichtstoff ohne die beschriebenen Nachteile, insbesondere ohne Schrumpf, aber mit erhöhter Formstabilität in der Wärme zu finden. Darüber hinaus soll er in einem weiten Bereich einsetzbar und einfach zu handhaben sein.

Die erfindungsgemäße Lösung besteht in einem Lyo-Gel, wobei das Geliermittel durch Vernetzung eines organischen vollsynthetischen Polymeren, das Carbonsäure-Gruppen enthält, mit Metall-Verbindungen herstellbar ist, und das Quellmittel eine schwerflüchtige inerte organische Flüssigkeit mit einer Flüchtigkeit ist, definiert durch ihren Verdampfungsverlust von weniger als 0,5 Gew.-% bei 105 °C nach 2 Stunden gemäß ASTM D 972.
Das Ausmaß der Quellung und der Vernetzungsgrad richten sich nach den erforderlichen Eigenschaften. Das Ausgangsgemisch aus Polymer-lösung und der Lösung bzw. Suspension der Metallverbindung soll
1) innerhalb der Verarbeitungszeit förderbar, frei oder unter Druck fließfähig sein, um Hohlräume auszufüllen,
2) nach Gelierung innerhalb der Dehnungsgrenzen unter mechanischem Druck elastisch verformbar sein und
3) die evtl. geforderten elektrischen Eigenschaften wie Dielektrizitätszahl, Druckschlagsfestigkeit und spez. Durchgangswiderstand permanent erfüllen.

Der Fachmann weiß oder kann anhand weniger Versuche erfahren, wie das Ausmaß der Quellung und die Stoffmengen an Polymer-Bausteinen mit und ohne Carbonsäurederivate zu sein hat. Bevorzugt wird ein Gewichtsverhältnis von Quellmittel zu Geliermittel von 1 bis 20 : 1.
Bevorzugt enthalten die Polymere 1 bis 5 Gew.-% an Bausteinen mit einer Carbonsäure bzw. ihrem Derivat.

Bei den erfindungsgemäßen Polymeren handelt es sich um Homo- oder Copolymere (und zwar sowohl statistische- als auch Block- und Pfropf-Polymere) wie Polyurethan, Polyamid, Polyester und Polymerisate von Monomeren mit olefinischen Doppelbindungen. Bevorzugt werden Copolymere mit olefinischer Doppelbindung, die Maleinsäure und ihre Derivate wie Anhydrid und Ester, aufgepfropft oder in die Kette eingebaut, enthalten, insbesondere thermoplastische Elastomere wie Styrol-Ethylen-Butylen-Styrol-Blockpolymere mit gepfropften Säuregruppen. Sie sind im Handel erhältlich bzw. können auf bekannte Weise hergestellt werden.
Unter "funktioneller Gruppe" sind Gruppen gemeint, die mit den Metallverbindungen unter Verarbeitungsbedingungen reagieren. Neben den Carbonsäuren, Carbonsäureestern und Carbonsäureanhydridgruppen können auch noch OH- und Amin-Gruppen anwesend sein, die alleine kaum oder gar nicht reagieren, zusammen mit den übrigen funktionellen Gruppen jedoch wirksam sind. Die freien Carbonsäuren reagieren deutlich schneller als die entsprechenden Anhydride. Bei benachbarter Stellung der funktionellen Gruppen, z.B. bei Maleinsäure reicht eine deutlich niedrigere Konzentration aus als bei rein statischer Verteilung, um bei sonst gleichen Bedingungen eine ausreichende Vernetzung zu erzielen. Die Carbonsäure-Gruppen können aber auch am Kettenende stehen. Brauchbare Polymere sind ELVAX 4320 (ein Copolymerisat aus Ethylen, einem Säure-Comonomeren und Vinylacetat mit einer Säurezahl von 4 bis 8), LOTADER 8750 (ein Copolymerisat aus Ethylen, Maleinsäureanhydrid und Acrylsäureester mit einer Säurezahl von 17 und einem Schmelzindex von 400), KRATON FG 1901 X (SEBS-Blockcopolymerisat mit aufgepfropftem Maleinsäureanhydrid, das hydrolysiert oder mit Alkoholen wie z.B. Ethanol umgesetzt sein kann) sowie MACROMELT 6208 (Copolyamid mit einer Säurezahl von > 5 und einer Aminzahl von < 0,8).

Für die Vernetzung brauchbare Metalle sind die der Hauptgruppen 2, 3, 4 und 5 sowie die Übergangsmetalle, insbesondere Ruthenium, Vanadium, Chrom, Cobalt, Mangan, Aluminium, Eisen, Titan, Zirkonium, Hafnium, Zinn, Niob, Vanadium und Cer.
Aber auch zweiwertige Metalle wie Kupfer Titanyl-, Cadmium, Cobalt, Mangan, Nickel, Palladium und Zink sind durchaus wirksam. Bevorzugte Metalle sind Eisen und Zirkonium. Die Metalle werden in Form ihrer Komplexe, insbesondere ihrer Chelate eingesetzt. Zur Chelatisierung eignen sich z.B. Octylenglykol, Triethanolamin, Acetylaceton oder Milchsäure. Bevorzugt wird Acetylaceton. Die Chelate werden aus den Metallalkoxiden und dem Chelatbildner hergestellt. Ihre Konzentration beeinflußt sowohl den Vernetzungsgrad als auch die Gelierzeit. Bevorzugt wird ein molares Verhältnis von Carbonsäure bzw. Carbonsäureester auf der einen Seite und Metallverbindung auf der anderen Seite von 0,3 bis 3 : 1, insbesondere 1 bis 2 : 1. Die Metall-Chelate werden vorzugsweise als Suspension oder Lösung den Polymerlösungen zugesetzt.

Bei den schwerflüchtigen inerten Lösungsmitteln handelt es sich um Flüssigkeiten wie natürliche Öle, z.B. Mineralöl und Öle auf pflanzlicher und tierischer Basis und synthetische Öle, z.B. Poly-α-olefine der allgemeinen Formel R₁-CH₂(CH₂-CHR)ₓ-H, Dicarbonsäureester der allgemeinen Formel ROOC-(CH₂)ₓ-C00R, Diarylalkane oder Dialkylbenzole, Ester von Polyolen mit Carbonsäuren, Polyglykole der allgemeinen Formel R₁-O(CHR-CH₂-O-)ₓ-H, Orthophosphorsäureester und Silikonöle. Es können auch Gemische von mehreren Lösungsmitteln verwendet werden. Bevorzugte Lösungsmittel sind Mineralöle und Poly-α-Olefine, Dialkylbenzole und Diarylalkane. Die Lösungsmittel ergeben mit den Ausgangspolymeren eine klare Lösung. Sie verhält sich rheologisch wie eine molekular-disperse Lösung. Das Lösungsmittel kann auch genommen werden, um die Metaliverbindung zu suspendieren oder zu lösen.

Das Gel kann in sehr geringen Mengen den Chelatbildner enthalten.

Das erfindungsgemäße Lyo-Gel kann noch weitere Zusätze enthalten, die aber seine grundlegenden Eigenschaften nicht verändern, insbesondere Füllstoffe, Streckmittel, Stabilisatoren und Oxidationsinhibitoren. Besonders genannt seien: pulverförmige Polymere, Vollund Hohlkugeln aus Glas oder Kunststoff, Leitfähigkeitsruß, Carbonfasern, Kieselsäure, Silikat und magnetische Pulver.

Das Lyo-Gel zeigt folgende bemerkenswerte Eigenschaften: Das Volumen hat sich gegenüber dem Ausgangsgemisch praktisch nicht geändert. Es ist formstabil und elastisch in einem weiten Temperaturbereich von -40 bis mehr als 200 °C, ohne zu schmelzen. Es haftet gut an Metallen wie Kupfer und Aluminium sowie an Kunststoffen wie Polyethylen, Polypropylen und Nylon. Es ist leicht und extrem in weiten Bereichen verformbar, wobei die Bereiche selbst wiederum durch das Verhältnis von polymerem Netzwerk zu organischem Dispergiermittel sowie durch den Vernetzungsgrad variiert werden können. Es ist weitgehend chemisch resistent. Bei der Reaktion werden nur die Chelatbildner abgespalten. Dabei handelt es sich vorzugsweise um Alkohole bzw. Ketone, also keine aggressive oder gefährdende Spaltprodukte.

Das erfindungsgemäße Lyo-Gel wird im allgemeinen folgendermaßen hergestellt: 100 Gew.-Teile des Polymeren mit 5 bis 100 g an funktionellen Gruppen pro kg Polymer werden in 50 bis 2 000 Gew.-Teilen des schwerflüchtigen inerten Quellmittels gelöst. Wie üblich wird das Gemisch erwärmt, z.B. auf 100 bis 150 °C und gerührt sowie anschließend abgekühlt. Die bevorzugt fein gemahlenen Metallchelate werden in dem inerten organischen Quellmittel mit niedrigem Dampfdruck suspendiert oder gelöst (Gewichtsverhältnis 1 : 1 bis 10) . Sie können aus Alkoholaten durch Zusatz der Chelatbildner hergestellt werden.

100 Gew.-Teile der Polymerlösung werden mit 0,1 bis 5 Gew.-Teilen der Metallverbindung in Pulverform, vorzugsweise aber suspendiert oder gelöst, bei Raumtemperatur gemischt, so daß eine möglichst gleichmäßige Verteilung erreicht wird.
Die Mischung reagiert innerhalb von etwa 1 Minute bis 1 Tag (je nach Einstellung) bei Raumtemperatur und ist in dieser Zeit flüssig und förderbar, so daß sie leicht blasenfrei in ein Formwerkzeug gefüllt werden kann. Die Reaktionstemperatur ist nicht kritisch. Die Umsetzung kann sowohl bei -30 als auch bei +60 °C erfolgen. Nach der eingestellten Gelierzeit von bis zu einer Stunde erhält man das formstabile Lyo-Gel.

Bevorzugte Reaktionsbedingungen sind: Es werden folgende Lösungsmittel für die bevorzugten Polymere, nämlich Styrol-Ethylen-Butadien-Styrol-Copolymere und sonstige Copolymere aus Comonomeren mit olefinischer Doppelbindung, die Maleinsäure und ihre Derivate wie Anhydrid und Ester, aufgepfropft oder in der Kette eingebaut, enthalten, eingesetzt: Mineralöle, Dialkylbenzole, Diarylalkane und Poly-α-Olefine.

Die Metallverbindungen haben einen Teilchendurchmesser von bevorzugt weniger als 50 µm. Sie werden in dem Lösungsmittel des Polymeren oder einer anderen geeigneten Flüssigkeit suspendiert oder gelöst. Die Metallverbindung kann aber auch unter Zusatz einer höher siedenden Hydroxy-Verbindung gelöst werden, beispielsweise in Benzylalkohol oder in NECIRES EPX-L (Warenbezeichnung für ein thermoplastisches Harz, basierend auf Vinylaromaten und mitpolymerisierten Phenolen, OHZ:65. Hersteller: Nevcin Polymers B.V., Holland). Die höhersiedende Hydroxy-Verbindung kann aber auch der Lösung des Polymeren zugegeben werden. Die Umsetzung erfolgt vorzugsweise bei Raumtemperatur.

Aufgrund der positiven Eigenschaften des Lyo-Gels und seiner einfachen Herstellung eignet es sich vorzugsweise zum Dichten von Vorrichtungen im Zusammenhang mit elektrischem Strom; denn die anfängliche Zweikomponentenreaktions-Lösung ist bei Raumtemperatur flüssig genug, um auch kleine Hohlräume wie Spalten und Fugen zwischen Körpern gut zu füllen. Seine Herstellung ist leicht kontrollierbar. Das gilt sowohl bezüglich der Temperatur, der Wärmeentwicklung, der Gelierzeit, als auch bezüglich der nicht kritischen Mischungsverhältnisse. Der Stoffschluß ist aufgrund der guten Haftung an Metallen und Kunststoffen sowie der elastischen Eigenschaften in weiten Temperaturbereichen besonders gut und alterungsbeständig. Daher wird das Volumen wirksam gas-, flüssigkeits- und staub-dicht ausgefüllt. Das Gel ist besonders wirksam gegen Wasser. Daher eignet sich das erfindungsgemäße Gel besonders, um Hohlräume in Kabeln und deren Verbindungselementen wie Steckern, Leisten, Muffen usw. zu verfüllen.

Die Erfindung wird anhand folgender Beispiele näher erläutert:

### Beispiel 1

a. Herstellung der Polymerlösung:
   - 10 Teile: Kraton FG 1901 X (SEBS-Copolymer mit ca. 2 % Maleinsäureanhydrid, hergestellt von der Fa. Shell) werden in
   - 90 Teilen: Dealen RD 25 R (ein Gemisch von Diarylalkanen und Dialkylbenzolen, hergestellt von der Fa. Texaco mit einem Verdampfungsverlust von 0,1 % bei 105 °C nach 2 Stunden gemäß an ASTM 972) bei ca. 130 bis 150 °C unter Rühren gelöst und danach auf ca. 20 °C abgekühlt.
b. Herstellung der Suspension mit der Metallverbindung
   - 1 Teil: Eisen-III-acetylacetonat, auf kleiner als 50 µm gemahlen und gesiebt, werden in
   - 3 Teilen: Dealen RD 25 R (s.o.)
   suspendiert.
c. Mischung der Lösung und der Suspension
   - 100 g: der Lösung werden mit
   - 2,5 g: der Suspension durch manuelles Rühren vermischt.

Die Mischung ist bei Raumtemperatur ca. 30 Minuten verarbeitbar, d.h. fließfähig und ist nach ca. 60 Minuten so stark geliert, daß sie von selbst aus zuvor vergossenen Hohlräumen nicht mehr ausfließt.

Das Gel ist weich von -40 °C bis +200 °C, ohne zu reißen oder zu schmelzen.

Es weist sehr gute Haftung zu Metallen (Cu, Al) sowie Kunststoffen (PE, PP, PA) auf.

### Beispiel 2

- a.100 Teile: einer Lösung gemäß Beispiel 1, wobei die Konzentration des Kraton FG 1901 X auf 20 % erhöht wurde.
- b. 10: Teile einer Lösung der Metallverbindung, hergestellt aus:
- 5: Teilen Zirkon-IV-acetylacetonat, gelöst in
- 20: Teilen Benzylalkohol, dann verdünnt mit
- 75: Teilen Mineralöl RD 25 R.
- c.: Nach Verrühren beider Lösungen bleibt die Mischung ca. 3 - 5 Minuten bei Raumtemperatur fließfähig. Nach 10 - 15 Minuten ist das Gemisch geliert. Von -40 °C bis +200 °C ist kein Reißen oder Schmelzen des Gels zu beobachten.
Die Haftung auf Metallen (Cu/Al) und Kunststoffen ist sehr gut.

### Beispiel 3

Zur Prüfung der thermischen Stabilität des Lyo-Gels wird der Tropfpunkt nach folgender Methode bestimmt: Ein Glasrohr mit einer Länge von 12 mm und einem Innen-Durchmesser von 8 mm wird mit einer Öffnung auf Silikonpapier gestellt und durch die andere Öffnung mit einem Gemisch aus der Polymerlösung und Metall-Verbindung bis zum Rand gefüllt. Nach Ablauf der eingestellten Gelierzeit wird das Silikonpapier abgezogen und das gefüllte Prüfröhrchen in einem Umlufttrockenschrank auf ein Netz aus Edelstahl mit einer lichten Maschenweite von 2 mm gestellt. Bei einer Temperatursteigerung von ca. 5 °C pro Minute (linear) wird die Temperatur ermittelt, bei der das Gel oder Teile davon heruntertropfen.

Bei den Gemischen gemäß Beispiel 1 und 2 lag der Tropfpunkt oberhalb von 200 °C, d.h. es verflüssigte sich unterhalb von 200 °C nicht.

## Patentansprüche

1. Lyo-Gel mit A) einem Geliermittel, herstellbar durch Vernetzung eines organischen vollsynthetischen Polymeren, enthaltend Carbonsäure-Gruppen, mit Metall-Verbindungen, und B) einer schwerflüchtigen inerten organischen Flüssigkeit mit einer Flüchtigkeit von weniger als 0,5 Gew.-% bei 105 °C nach 2 Stunden gemäß ASTM D 972 als Quellmittel.

2. Lyo-Gel gemäß Anspruch 1, gekennzeichnet durch das Gewichtsverhältnis von Quellmittel zu Geliermittel von 1 bis 20 : 1.

3. Lyo-Gel gemäß Anspruch 1, gekennzeichnet durch eine elastische Verformbarkeit von -40 bis 200 °C sowie keine Verflüssigung bis 200 °C.

4. Lyo-Gel gemäß Anspruch 1, dadurch gekennzeichnet, daß das Polymere ein Copolymerisat aus mindestens einem Monomeren mit einer olefinischen Doppelbindung und mindestens einem Comonomeren mit einer Carbonsäuregruppe oder deren Anhydrid oder Ester als weitere funktionelle Gruppe ist.

5. Lyo-Gel gemäß Anspruch 1, dadurch gekennzeichnet, daß es sich bei den Metallen um Metalle der Hauptgruppen 2, 3, 4 und 5 sowie um die Übergangsmetalle handelt, insbesondere um Eisen und Zirkonium.

6. Lyo-Gel nach Anspruch 5, dadurch gekennzeichnet, daß als Metalle Eisen und Zirkonium in Form ihrer Acetylacetonate eingesetzt werden.

7. Lyo-Gel nach Anspruch 1, dadurch gekennzeichnet, daß die schwerflüchtige inerte organische Flüssigkeit aus einem synthetischen Kohlenwasserstoff besteht.

8. Verfahren zur Herstellung eines Lyo-Gels nach mindestens einem der Ansprüche 1 bis 7, dadurch gekennzeichnet, daß man das Polymere in der schwerflüchtigen inerten Flüssigkeit löst, diese Lösung mit gelöster oder suspendierter Metallverbindung mischt und reagieren läßt.

9. Verfahren nach Anspruch 8, dadurch gekennzeichnet, daß die Metallverbindungen ausreichend fein verteilt sind und bevorzugt eine Teilchengröße von weniger als 50 µm haben.

10. Verfahren nach Anspruch 5 oder 6, dadurch gekennzeichnet, daß die Metallverbindung in dem gleichen Lösungsmittel gelöst ist wie das Polymere, gegebenenfalls unter Zusatz einer möglichst hochsiedenden Hydroxy-Verbindung.

11. Verwendung des Lyo-Gels nach mindestens einem der Ansprüche 1 bis 7 zum Dichten, insbesondere von Vorrichtungen im Zusammenhang mit elektrischem Strom.

12. Kombinations-Erzeugnis zur Herstellung des Lyo-Gels nach Anspruch 1, enthaltend
A) eine Lösung eines organischen vollsynthetischen Polymeren mit Carbonsäure-Gruppen oder deren Anhydriden oder Estern in einem schwerflüchtigen inerten organischen Lösungsmittel mit einer Flüchtigkeit von weniger als 0,5 Gew.-% bei 105 °C nach 2 Stunden gemäß ASTM D 972.
B) einem Metall-Komplex, gelöst oder suspendiert in einer schwerflüchtigen inerten organischen Flüssigkeit mit einer Flüchtigkeit von weniger als 0,5 Gew.-% bei 105 °C nach 2 Stunden gemäß ASTM D 972.

## Claims

1. A lyo gel containing A) a gelling agent of an organic fully synthetic polymer which is crosslinked through its carboxylic acid groups and through metal compounds and B) a low-volatility inert organic liquid having a volatility of less than 0.5% by weight, as determined after 2 hours at 105°C in accordance with ASTM D 972, as swelling agent.

2. A lyo gel as claimed in claim 1, characterized by a ratio by weight of the swelling agent to the gelling agent of 1 to 20:1.

3. A lyo gel as claimed in claim 1, characterized by elastic deformability from -40 to 200°C and by no liquefaction up to 200°C.

4. A lyo gel as claimed in claim 1, characterized in that the polymer is a copolymer of at least one monomer containing an olefinic double bond and at least one comonomer containing a carboxylic acid or one of its derivatives as a further functional group.

5. A lyo gel as claimed in claim 1, characterized in that the metals are metals of the 2nd, 3rd, 4th and 5th main groups and transition metals, particularly iron and zirconium.

6. A lyo gel as claimed in claim 5, characterized in that iron and zirconium in the form of their acetyl acetonates are used as the metals.

7. A lyo gel as claimed in claim 1, characterized in that the low-volatility inert organic liquid consists of a synthetic hydrocarbon.

8. A process for the production of the lyo gel claimed in at least one of claims 1 to 7, characterized in that the polymer is dissolved in the low-volatility inert liquid, and the resulting solution is mixed and allowed to react with dissolved or suspended metal compound.

9. A process as claimed in claim 8, characterized in that the metal compounds are sufficiently finely distributed and preferably have a particle size of less than 50 µm.

10. A process as claimed in claim 5 or 6, characterized in that the metal compound is dissolved in the same solvent as the polymer, optionally with addition of a high-boiling hydroxy compound.

11. The use of the lyo gel claimed in at least one of claims 1 to 7 for sealing, particularly devices involving the use of electrical current.

12. A combination product for the production of the lyo gel claimed in claim 1, containing
A) a solution of an organic fully synthetic polymer containing carboxylic acid groups or anhydrides or esters thereof in a low-volatility inert organic solvent having a volatility of less than 0.5% by weight, as measured after 2 hours at 105°C in accordance with ASTM D 972,
B) a metal complex dissolved or suspended in a low-volatility inert organic liquid having a volatility of less than 0.5% by weight, as measured after 2 hours at 105°C in accordance with ASTM D 972.

## Revendications

1. Lyogel avec
A) un agent de gélification, que l'on peut produire par réticulation d'un polymère organique complètement synthétique qui renferme des groupes d'acide carboxylique, avec des composés métalliques et
B) un liquide difficilement volatil, inerte, organique ayant une volatilité de moins que 0,5 % en poids à 105°C après 2 heures, conformément à la norme ASTM D 972 en tant qu'agent de gonflement.

2. Lyogel selon la revendication 1, caractérisé par le rapport en poids de l'agent de gonflement à l'agent de gélification de 1 à 20 :1.

3. Lyogel selon la revendication 1, caractérisé par une déformabilité élastique de -40 à 200°C ainsi que par une absence de liquéfaction jusqu'à 200°C.

4. Lyogel selon la revendication 1, caractérisé en ce que le polymère est un copolymérisat à base d'au moins un monomère avec une double liaison oléfinique et au moins un comonomère avec un groupe d'acide carboxylique ou ses anhydrides ou esters, comme groupe fonctionnel supplémentaire.

5. Lyogel selon la revendication 1, caractérisé en ce qu'il s'agit pour les métaux, de métaux des groupes principaux 2, 3, 4, et 5 ainsi que des métaux de transition, en particulier de fer et de zirconium.

6. Lyogel selon la revendication 5, caractérisé en ce que l'on met en oeuvre comme métaux, du fer et du zirconium sous la forme de leurs acétylacétonates.

7. Lyogel selon la revendication 1, caractérisé en ce que le liquide inerte, organique, difficilement volatil consiste en un hydrocarbure synthétique.

8. Procédé de préparation d'un lyogel selon au moins une des revendications 1 à 7, caractérisé en ce que l'on dissout le polymère dans le liquide inerte difficilement volatil, en ce que l'on mélange cette solution avec un dérivé métallique, dissous ou mis en suspension et que l'on laisse réagir.

9. Procédé selon la revendication 8, caractérisé en ce que les dérivés métalliques sont suffisamment finement divisés et ont de préférence une taille de particules de moins de 50 µm.

10. Procédé selon la revendication 5 ou 6, caractérisé en ce que le dérivé métallique est dissous dans le même solvant que le polymère, le cas échéant en ajoutant un composé hydroxylé à point d'ébullition le plus élevé possible.

11. Utilisation du lyogel selon au moins une des revendications 1 à 7 pour l'étanchement, en particulier de dispositifs en relation avec le courant électrique.

12. Produit de combinaison pour la préparation du lyogel selon la revendication 1, qui renferme
A) une solution d'un polymère organique complètement synthétique ayant des groupes acide carboxylique ou leurs anhydrides, ou leurs esters, dans un solvant organique inerte difficilement volatil ayant une volatilité de moins de 0,5 % en poids à 105°C après 2 heures conformément à la norme ASTM D 972.
B) un complexe métallique dissous ou mis en suspension dans un liquide inerte, organique, difficilement volatil ayant une volatilité de moins de 0,5 % en poids à 105°C après 2 heures, conformément à la norme ASTM D 972.
